Europäisches Patentamt

European Patent Office

Office européen des brevets

Veröffentlichungsnummer: **0 285 005**

A1

# EUROPÄISCHE PATENTANMELDUNG

Anmeldenummer: 88104749.2

Int. Cl.⁴: **B60T 17/08** , F16D 65/32

Anmeldetag: 24.03.88

Priorität: 30.03.87 DE 3710475

Veröffentlichungstag der Anmeldung:
05.10.88 Patentblatt 88/40

Benannte Vertragsstaaten:
AT CH DE ES FR GB IT LI SE

Anmelder: **Bergische Stahl-Industrie**
**Papenbergerstrasse 38**
**D-5630 Remscheid(DE)**

Erfinder: **Rocholl, Hans**
**Damaschke Strasse 17a**
**D-5630 Remscheid(DE)**
Erfinder: **Klein, Horst**
**Erlen Strasse 23**
**D-5630 Remscheid(DE)**

Vertreter: **Jung, Hermann L., Dipl.-Chem.**
**Postfach 1728 Augusta-Allee 10**
**D-6380 Bad Homburg v.d.H.(DE)**

Lösevorrichtung für einen Federspeicherbremszylinder.

Lösevorrichtung für einen Federspeicherbremszylinder mit einer Kugelkupplung o.ä., wobei die Kugeln von einem Verschlußstück in Verschlussposition gehalten werden und das Verschlußstück (19) in seiner Innenwand in konzentrischer Richtung abwechselnd eine Rast (20) und einer jeder Kupplungskugel (17) entsprechende Ausnehmung (21) besitzt und das Verschlußstück (19) drehbar auf der Kolbenstange (12) bzw. einem mit dem Kolben (14) verbundenen Zwischenstück (18) liegt und eine an sich bekannte Vorrichtung (22) zur Verdrehung des Verschlußstücks (19) am den Abstand (23) zwischen Rast (20) und Ausnehmung (21) vorgesehen ist.

Fig 2

## Lösevorrichtung für einen Federspeicherbremszylinder

Die Erfindung betrifft eine Lösevorrichtung für einen Federspeicherbremszylinder, bei dem der auf die Betriebsbremse wirkende Kolben des Federspeichers über eine Kugelkupplung o.ä.mit der Kolbenstange lösbar verbunden ist, wobei die Kugeln mit einem Verschlußstück in Verschlussposition gehalten werden.

Bei Vorrichtungen zur Betätigung einer Bremse mittels eines Federspeichers, wenn die hydraulische oder pneumatische Bremse ausgefallen ist, ergibt sich immer wieder das Problem, dass dafür Sorge getragen werden muss, dass der eingefallene Federspeicher, welcher das Fahrzeug bremst, gelöst werden muss, um das Fahrzeug rangieren zu können.

Alle bisher bekannten Vorrichtungen lösen dieses Problem dadurch, dass auf der Kolbenstange, die den Federspeicher mit dem Betriebsbremskolben verbindet,ein Gewinde angeordnet ist, auf dem eine Mutter liegt, mit der die Kolbenstange zurückgeholt werden kann, um so die Bremse zu lösen. Bei der aus der DE-OS 24 50 652 bekannten Vorrichtung muss mit einem besonders dafür adaptierten Schlüssel eine Drehung der Mutter vorgenommen werden, wobei normalerweise eine Kupplung gelöst werden muss, die die Drehung der Mutter verhindert. Auch die Vorrichtung nach DE-OS 26 08 502 arbeitet nach dem gleichen Prinzip. Nach der EP-OS 0 171 627 wird die Drehung der Mutter von einer unter Spannung stehenden Spiralfeder bewirkt, nachdem diese zu diesem Zweck freigegeben wurde, nachdem sie vorher aufgezogen worden war. Allen bekannten Vorrichtungen gemeinsam ist die Tatsache, dass relativ aufwendige Konstruktionen vorgesehen wurden, welche dann natürlich auch anfällig für Störungen sind.

Der vorliegenden Erfindung liegt daher die Aufgabe zugrunde, eine wesentlich einfachere Konstruktion vorzusehen, welche nicht die Nachteile der bekannten Vorrichtungen besitzt.

Die Lösung dieser Aufgabe besteht darin, dass das Verschlußstück in seiner Innenwand in konzentrischer Richtung abwechselnd eine Rast und eine jeder Kupplungskugel entsprechende Ausnehmung besitzt und das Verschlußstück drehbar auf der Kolbenstange bzw. einem Zwischenstück liegt und eine an sich bekannte Vorrichtung zur Verdrehung des Verschlußstücks um den Abstand zwischen Rast und Ausnehmung vorgesehen ist.

Zweckmässig ist das Zwischenstück mit Kolben des Federspeichers verbunden und besitzt den Kupplungskugeln entsprechende Ausnehmungen.

Vorteilhaft beträgt die Dicke des Zwischenstücks im Bereich der Kupplungskugeln weniger als der Kugeldurchmesser.

Der Vorteil der erfindungsgemässen Ausbildung der Lösevorrichtung besteht vor allem darin, dass es sich um eine relativ sehr einfache und einfach zu bedienende Vorrichtung handelt, was auch dazu führt, dass die Sicherheit sehr gross ist.

In den Zeichnungen ist eine beispielsweise Ausführungsform der Erfindung dargestellt und zwar zeigt

Figur 1 einen Schnitt durch einen Federspeicherzylinder mit

A: Obere Hälfte in eingefallenem Zustand

B: Untere Hälfte in gelöstem Zustand

Figur 2 einen Schnitt durch Betätigung und Verschlußstück etc.

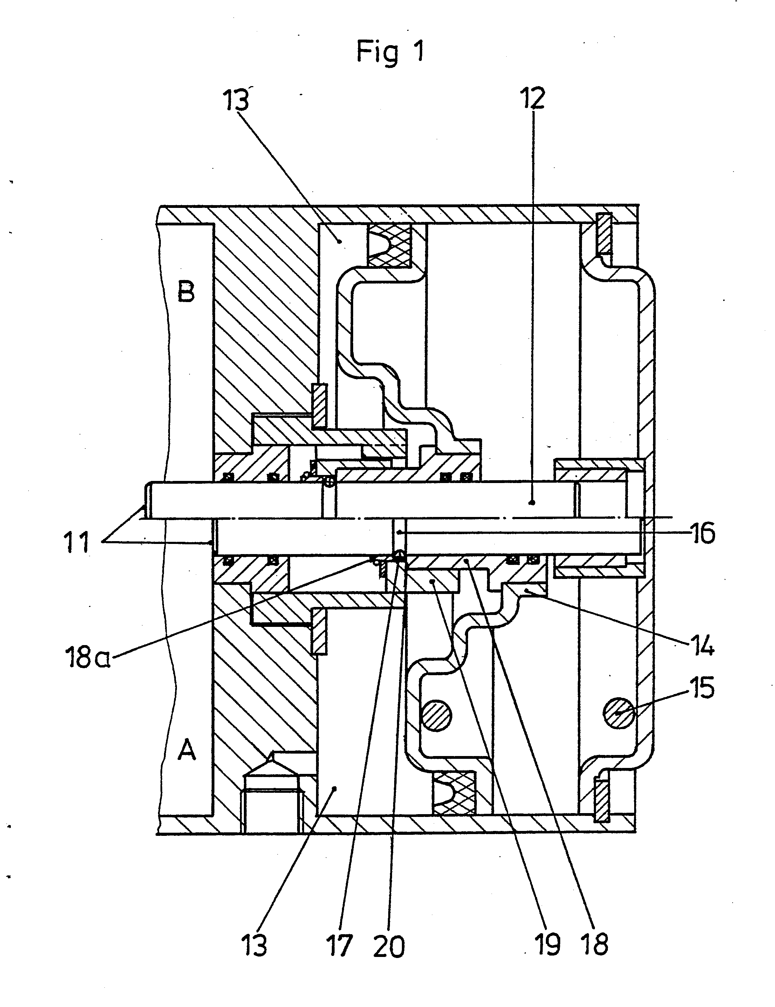

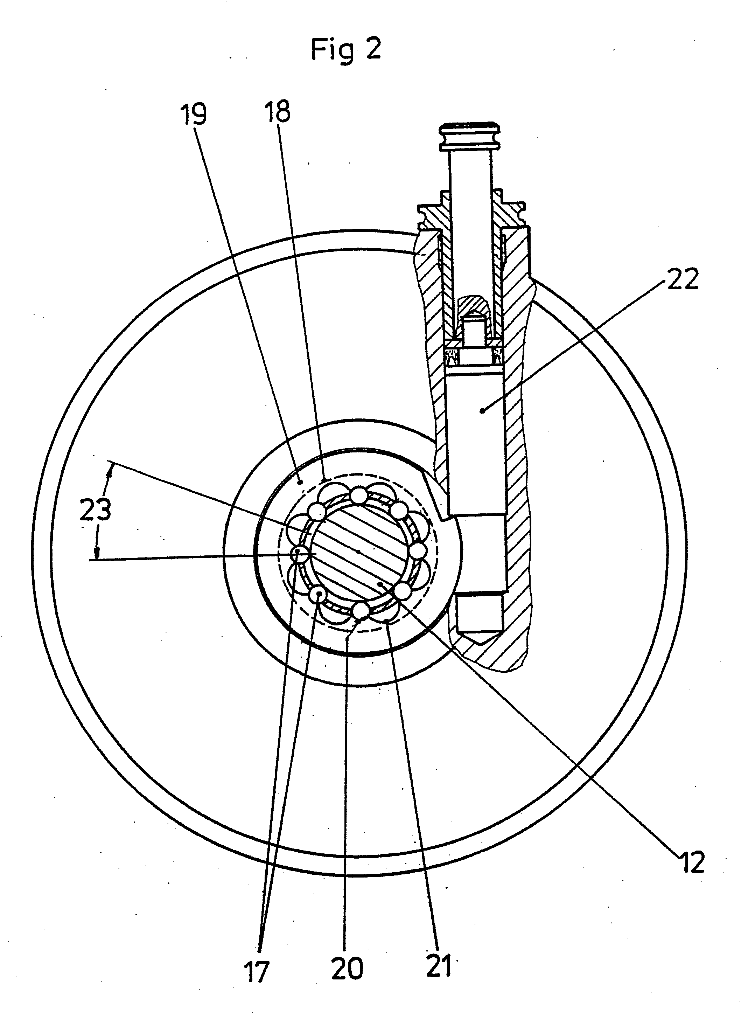

Nach den Figuren 1A und 2 befindet sich der Federspeicher im Normalzustand, in dem die Vorderseite 11 der Kolbenstange 12 am Kolben (nicht dargestellt) der hydraulischen oder pneumatischen Betriebsbremse anliegt. Dadurch, dass im Raum 13 Druck aufgebaut steht der Kolben 14 in rückwärtiger Wartestellung, in welcher die Speicherfeder 15 gespannt ist. In der Kolbenstange 12 ist eine Ringnut 16, in der die Kugeln 17 der Kugelkupplung liegen, welche sich etwa zur Hälfte in eine radiale Ausnehmung 21 des Zwischenstücks 18 erstrecken, welches mit dem Kolben 14 des Federspeichers fest verbunden ist. Die Dicke des im Bereich der Kugeln 17 liegenden Teils 18a des Zwischenstücks 18 beträgt weniger als der Durchmesser der Kugeln 17. Diese Kugeln 17 werden dadurch in der Nut 16 gehalten, dass sie von der Rast 20 des Verschlußstücks 19 gehalten werden, wie es in Figur 2 zu sehen ist. Das Verschlußstück 19 ist ringförmig ausgebildet und liegt auf dem Zwischenstück 18 drehbar auf und wird in bekannter Weise von einer Feder o.ä. in der in Figur 2 dargestellten Normallage gehalten. Wie weiter in Figur 2 zu sehen ist, trägt der Innenumfang des Verschlußstücks 19 abwechselnd eine Rast 20 und eine Ausnehmung 21, welche etwa die Grösse einer Kugel 17 hat. Das Verschlußstück 19 kann mit einer an sich bekannten Vorrichtung 22 um den Winkel 23, welcher dem Abstand der Rast 20 von der Ausnehmung 21 entspricht, gedreht werden.

Wie schon beschrieben, befindet sich der Federspeicher in der in Figur 1A dargestellten Warte-oder Ruhestellung. Fällt nun aus irgendwelchen Gründen der Druck im Bremssystem aus, so kann nicht gebremst werden, weil die Betriebsbremse drucklos ist. Da aber dabei auch der Raum 13 des Federspeichers drucklos wird, kann sich der Kolben 14 des Federspeichers nicht mehr in der in Fig. 1A dargestellten Lage halten, sondern wird von der Speicherfeder 15 in die in Fig.1B gezeigt Stellung gedrückt. Der Kolben 14 nimmt dabei die Kuppelstange 12 mit, weil die Kugelkupplung eine feste Verbindung zwischen Kolben 14 und Kolbenstange 12 hergestellt hat. Die Kolbenstange 12 drückt dabei mit ihrer Vorderseite 11 den Kolben der Betriebsbremse soweit nach vorne, bis die Bremsbeläge zur Anlage gekommen sind, wodurch das Fahrzeug abgebremst wird und zum Stillstand kommt. Das Fahrzeug kann also nicht bremsenlos weiterfahren, wenn der Bremsdruck im Betriebssystem ausfällt.

Kann der Betriebsdruck im System alsbald wieder aufgebaut werden, so wird auch im Raum 13 Druck aufgebaut und der Kolben 14 fährt wieder mit der Kolbenstange 12 aus der Stellung nach Fig. 1B in die Stellung nach Fig. 1A, wodurch die Feder 15 gespannt ist und der Federspeicher wieder in Bereitschaftsstellung steht.

Kann der Betriebsdruck im System aber nicht wieder an Ort und Stelle aufgebaut werden, so kann das Fahrzeug nicht abgeschleppt werden, weil die Bremsbeläge solange angelegt bleiben, wie der Federspeicher in der Stellung nach Fig. 1B stehenbleibt.

Damit es doch möglich ist, das Fahrzeug abzuschleppen, wird die Kugelkupplung gelöst, indem das Verschlußstück 19 mit der Vorrichtung 22 um den Betrag (Winkel) 23 verdreht wird. Dann kann sich jede Kugel 17 radial nach aussen in die Ausnehmung 21 hinein verschieben, sodass sie nicht mehr in der Ringnut 16 liegt und somit die Verbindung zwischen dem Zwischenstück 18 und damit dem Kolben 14 und der Kolbenstange 12 aufgehoben ist. In diesem Falle wird die Rückholfeder im Betriebsbremszylinder dessen Kolben in Lösestellung und gleichzeitig die Kolbenstange 12 in Lösestellung, d.h. in die in Fig. 1A gezeigte Stellung zurückdrücken, wohingegen der Kolben 14 in der in Fig. 1B gezeigten Stellung stehenbleibt. Dabei werden die Bremsbeläge gelöst und das Fahrzeug kann ohne weiteres abgeschleppt werden, d.h. es kann fahren ohne dass gebremst werden kann. Es kann aber so aus dem Verkehr gezogen werden.

Nach der Reparatur des Drucksystems wird wieder Druck in den Raum 13 gegeben, sodass dadurch der Kolben 14 gegen die Feder 15 in die in Fig. 1A gezeigte Stellung gebracht wird, in der die Kugeln 17 wieder in die Ringnut 16 einfallen, woraufhin sich das Verschlußstück 19 wieder um den Winkel 23 zurückdreht, sodass jede Kugel 17 von einer Rast 20 in der Ringnut 16 gehalten wird, wodurch Kolben 14 und Kolbenstange 12 wieder fest miteinander verkuppelt sind. Der Ausgangszustand ist wieder erreicht und der Federspeicher steht wieder für eine Notbremsung zur Verfügung.

Selbstverständlich können auch andere Einrichtungen zur Verdrehung des Verschlußstücks 19 verwendet werden, die alle aus dem Stand der Technik bekannt sind. Wichtig bleibt, dass das Verschlußstück 19 immer mittels einer Feder o.ä. in die in Fig. 2 gezeigte Normalstellung zurückgedreht und dort gehalten wird. Die Vorrichtung 22 kann aber auch als Kolben ausgebildet sein, welcher mit dem Druckraum 13 verbunden ist, wodurch die Vorrichtung 22 in der in Fig. 2 gezeigten Normalstellung gehalten wird. Die An-Anzahl der Kugeln 17 richtet sich nach der Stärke der Speicherfeder 15, welche ihrerseits von der Grösse der Bremsbeläge und der aufzubringenden Bremskraft abhängt.

Man kann natürlich die Kolbenstange 12 auch fest mit dem Kolben der Betriebsbremse verbinden oder es ist auch möglich, den Federspeicher an einer anderen Stelle als die Betriebsbremse anzuordnen und zwischen den beiden Vorrichtungen eine mechanische, hydraulische und/oder pneumatische Übertragung vorzusehen. In diesem Falle kann auch ein Federspeicher auf zwei Betriebsbremsen wirken.

## Ansprüche

1) Lösevorrichtung für einen Federspeicherbremszylinder, bei dem der auf die Betriebsbremse wirkende Kolben des Federspeichers über eine Kugelkupplung o.ä. mit der Kolbenstange lösbar verbunden ist, wobei die Kugeln mit einem Verschlußstück in Verschlußposition gehalten werden, dadurch gekennzeichnet, dass das Verschlußstück (19) in seiner Innenwand in konzentrischer Richtung abwechselnd eine Rast (20) und eine jeder Kupplungskugel (17) entsprechende Ausnehmung (21) besitzt und das Verschlußstück (19) drehbar auf der Kolbenstange (12) bzw. einem mit dem Kolben (14) verbundenen Zwischenstück (18) liegt und eine an sich bekannte Vorrichtung (22) zur Verdrehung des Verschlußstücks (19) um den Abstand (23) zwischen Rast (20) und Ausnehmung (21) vorgesehen ist.

2) Lösevorrichtung nach Anspruch 1, dadurch gekennzeichnet, dass das Zwischenstück (18) mit dem Kolben (14) des Federspeichers verbunden ist und dass es den Kupplungskugeln (17) entsprechende Ausnehmungen (21) besitzt.

3) Lösevorrichtung nach Anspruch 1 oder 2, dadurch gekennzeichnet, dass die Dicke des Zwischenstücks (18) im Bereich (18a) der Kupplungskugeln (17) weniger als der Durchmesser dieser Kupplungskugeln beträgt.

4) Lösevorrichtung nach einem der Ansprüche 1 bis 3, dadurch gekennzeichnet, dass die dem Verschlußstück (19) zugeordnete Vorrichtung (22) zur Verdrehung des Verschlußstücks (19) als Kolben ausgebildet ist und mit dem Druckraum (13) verbunden die Vorrichtung (22) in Offenstellung bei Druck im Druckraum (13) drückt.

0 285 005

Fig 1

Fig 2

| Europäisches Patentamt | EUROPÄISCHER RECHERCHENBERICHT | Nummer der Anmeldung |
|---|---|---|
| | | EP 88 10 4749 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 054 100 (WABCO FAHRZEUGBREMSEN) <br> * Figuren 1-3 * <br> --- | 1,2 | B 60 T 17/08 <br> F 16 D 65/32 |
| A | DE-U-1 943 767 (WESTINGHOUSE BRENSEN- UND APPARATEBAU) <br> * Seite 3, Zeilen 21-35; Figur * <br> --- | 4 | |
| A | DE-B-2 646 158 (GRAUBREMSE) <br> ----- | | |

RECHERCHIERTE SACHGEBIETE (Int. Cl.4)

B 60 T 17/00
F 16 D 65/00

Der vorliegende Recherchenbericht wurde für alle Patentansprüche erstellt

| Recherchenort | Abschlußdatum der Recherche | Prüfer |
|---|---|---|
| BERLIN | 22-06-1988 | LUDWIG H J |